# EUROPEAN PATENT APPLICATION

(11) **EP 2 484 920 A1**
(43) Date of publication of application: **08.08.2012**
(21) Application number: 12154058.7
(22) Date of filing: 06.02.2012
(51) Int. Cl.: F16B 4/00, F16B 5/01

(54) **Methods and apparatus for mechanically joining metal components and composite components**

(30) Priority: 08.02.2011 US 201113022753
(71) Applicant: The Boeing Company, Chicago, IL 60606-2016 (US)
(72) Inventor: Woods, Mark A, Renton, WA Washington 98056 (US); Inman, John E, Frontenac, MO Missouri 63131 (US); Feikert, Edward, Saint Charles, MO Missouri 63303 (US); Jones, Julie R, Bethalto, IL Illinois 62010 (US); Blahut, Elizabeth D, Renton, WA Washington 98057 (US)
(74) Representative: McLeish, Nicholas Alistair Maxwell

(57) **Abstract**

A method for joining a composite structure and a metallic structure is described. The method includes aligning the composite structure and the metallic structure, drilling a hole through the aligned structures creating an aligned hole, and inserting an interference fit fastener through the aligned hole such that the interference fit fastener engages a cylindrical wall in the composite structure formed by the drilling of the hole.

## Description

### BACKGROUND

The field of the disclosure relates generally to couplings made between two or more mechanical components, and more specifically, to methods and apparatus for mechanically joining metal components and composite components.

Relevant to the current disclosure, there are two types of fasteners utilized in industry, clearance fit fasteners and interference fit fasteners. Clearance fit fasteners are best exemplified by a nut and bolt. Generally, a hole is drilled through the two components to be joined, and a bolt having a diameter that is less that that of the hole is passed through, with a washer and/or a nut being threaded onto the bolt to complete the mechanical joining of the two components. Alternatively, a swaging process is utilized instead of using a nut to complete the assembly.

When using interference fit fasteners, the same process is generally followed. However, the fastener includes a shank portion with a diameter that is slightly larger than the diameter of the drilled holes. Once installed, this shank portion will be in contact with the walls defined by the holes in the two components, and a nut or swaging device is attached to the distal end portion that extends from the assembly. When an interference fit fastener is utilized, a hydraulic or pneumatic device is used to pull or push the fastener through the hole such that the enlarged shank is properly placed in the hole.

When holes are bored or drilled through metallic components, burrs result. Burrs about the holes of such metallic elements lead to reduced fatigue life (reduced load carrying capability). There are two currently accepted methods for addressing burrs in metallic components that are to be utilized in aerospace structures. In the first method, once all the holes are drilled through the two components to be joined, the components are disassembled so that all of the holes in the assembly can be deburred. Such a process is inefficient and costly as it generally constitutes assembling a structure twice.

The second method also has drawbacks. Such method is to increase the width of the components through which the holes are drilled to counteract the reduction in fatigue life. In such assemblies, the disassembly and deburring steps are avoided, however, the weight gain that results from the extra material is generally unacceptable in an aerospace application.

The current state of the art is to not utilize interference fit fasteners as described above when joining a metallic component and a composite component. It is commonly held that this creates an unacceptable amount of damage to the composite material and has not been implemented to date. However, it is known to utilize a clearance fit sleeve in the hole within a composite material and then pull an interference fit fastener through the sleeve such that its shank engages the sleeve, causing the sleeve to expand and engage the perimeter of the hole in the composite material.

It is also known to create coaxial holes in the metallic material and the composite material with the hole in the composite material having a larger diameter so that an interference fit may be obtained with the metal and a clearance fit with the composite. This once again requires disassembly of the components to obtain the larger diameter in the composite part and is a complex and expensive process.

### BRIEF DESCRIPTION

In one aspect, a method for joining a composite structure and a metallic structure is provided. The method includes aligning the composite structure and the metallic structure, drilling a hole through the aligned structures creating an aligned hole, and inserting an interference fit fastener through the aligned hole such that the interference fit fastener engages a cylindrical wall in the composite structure formed by the drilling of the hole.

In another aspect, a structure is provided that includes a first component fabricated utilizing a composite material and comprising at least one hole formed therein, each said hole defining a composite cylindrical wall, a second component fabricated utilizing a metallic material and comprising at least one hole formed therein, each said hole defining a metallic cylindrical wall, and at least one interference fit fastener inserted through aligned holes in said first component and said second component, said at least one interference fit fastener in direct contact with the composite cylindrical wall.

In still another aspect, an aircraft is provided that includes a first component fabricated from a metallic material, a second component fabricated from a graphite epoxy material, and a sleeveless interference fit fastener providing an attachment between said first component and said second component.

In yet another aspect, an assembly method is provided that includes drilling at least one hole through a composite structure and a metallic structure, the composite structure and metallic structure aligned with respect to one another, the drilling resulting in at least one burr in the metallic structure, and inserting an interference fit fastener through each of the at least one holes such that a shank associated with the fastener exerts a stress on the metallic component that counteracts a propensity for fatigue fracture introduced by the burr and such that the shank of the fastener directly engages a cylindrical wall in the composite structure formed by the drilling of the at least one hole.

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

Figure 1 is a flow diagram of an aircraft production and service methodology.
Figure 2 is a block diagram of an aircraft.
Figure 3 is a diagram illustrating a numeric controlled drill-fill system located to a drilling location where a metallic component and a composite component are held in position with respect to one another.
Figure 4 is a diagram illustrating the numeric controlled drill-fill system of Figure 3 drilling a hole through the metallic component and the composite component.
Figure 5 is a diagram illustrating the numeric controlled drill-fill system of Figure 3 using a hole probe to check hole diameter, stack thickness, chamfer depth, gaps and the like in the metallic component and the composite component.
Figure 6 is a diagram illustrating the numeric controlled drill-fill system of Figure 3 feeding an interference fit fastener into a feed head.
Figure 7 is a diagram illustrating the numeric controlled drill-fill system of Figure 3 inserting the interference fit fastener into the drilled hole through the metallic component and the composite component.
Figure 8 is a diagram illustrating the numeric controlled drill-fill system of Figure 3 as well as a hydraulic puller operating to pull the interference fit fastener the remainder of the way into the drilled hole such that the head of the fastener is firmly seated against the metallic component 302.
Figure 9 is a diagram illustrating the numeric controlled drill-fill system of Figure 3, the feed head of the system being retracted from the assembly
Figure 10 illustrates a cross-section of a metallic material having a hole drilled therethrough, the drilling operation resulting in entrance burrs and exit burrs.
Figure 11 illustrates the cross-section of Figure 10, the entrance burrs and exit burrs having been chamfered.
Figure 12 illustrates the current methodology in regard to the joining of a metallic component and a composite component using a clearance fit fastener.
Figure 13 illustrates the joining of a metallic component and a composite component using an interference fit fastener.
Figure 14 is a graph illustrating a pulling load versus fastener diameter for a number of interference fit fasteners.
Figure 15 is a graph that illustrates an insertion load for an interference fit fastener being pulled through a first assembly of titanium and graphite composite.
Figure 16 is a graph that illustrates an insertion load for an interference fit fastener being pulled through a second assembly of titanium and graphite composite.
Figure 17 is a graph illustrating that relative fatigue quality increases as the amount of interference increases.
Figure 18 is a graph that illustrates the effect of interference on fatigue life for a particular fastener.
Figure 19 is a graph that illustrates the effect of interference on fatigue life for a particular fastener.
Figure 20 is a graph that illustrates filled hole compression for a 5/16 inch (nominal) fastener.
Figure 21 is a graph that illustrates filled hole tension based on interference.
Figure 22 is a graph that illustrates filled hole tension based on interference.
Figure 23 is a graph that illustrates ultimate bearing stress for a 5/16 inch (nominal) fastener.
Figure 24 is a graph that illustrates proportional bearing stress for a 5/16 inch (nominal) fastener.
Figure 25 is a graph that illustrates load vs. displacement in lap shear for the first 3000 pounds of load for a 5/16 inch (nominal) fastener.
Figure 26 is a graph that illustrates load vs. displacement in lap shear for the first 0.1 inch of displacement for a 5/16 inch (nominal) fastener.
Figure 27 is a graph that illustrates ultimate bearing stress for a 7/16 inch (nominal) fastener.
Figure 28 is a graph that illustrates proportional bearing stress for a 7/16 inch (nominal) fastener.
Figure 29 is a graph that illustrates load vs. displacement in lap shear for the first 5000 pounds of load for a 7/16 inch (nominal) fastener.
Figure 30 is a graph that illustrates load vs. displacement in lap shear for the first 0.125 inch of displacement for a 7/16 inch (nominal) fastener.
Figure 31 is a side view of an interference fit fastener that incorporates an anti-rotation feature on the threaded side of the fastener.
Figure 32 is a side view of an interference fit fastener that incorporates a threaded pull stem.
Figure 33 is a side view of an interference fit fastener that incorporates a segmented threaded pull stem.
Figure 34, 35, 36 and 37 are side views of interference fit fastener embodiments that incorporate undersized pull stems.

### DETAILED DESCRIPTION

The described embodiments are directed to utilization of an interference fit fastener to provide an attachment between a metallic component and a composite component. Heretofore the industry standard has been to utilize an interference fit fastener along with a sleeve when incorporating interference fit fasteners with a composite material. However, and as further described herein, current composite material formulations provide robustness in this regard and sleeves are not utilized in the described embodiments. Particularly, gathered data indicates there is no significant damage to the composite material provided the interference fit fastener is supplied with a lubricious coating and the holes in the metallic material and the composite material are in alignment. The process incorporates a "pull through" technique where a pulling device is utilized to "pull" the interference fit fastener through a hole in a material. In contrast with a "push through" technique, there is a counteracting force on the exit side of the hole that is exerted by the pulling device which keeps the material combination in compression during installation. As a necessary compromise, where pulling devices cannot be used due to clearance constraints, or where structure thickness is too great, some holes may be left open to be filled subsequently using an alternative installation process. Alternative installation methods could be sleeved fasteners (for thick structures) or impact driving devices. In these instances, the material combination is held in compression by adjacent fasteners that were previously installed or by temporary fasteners.

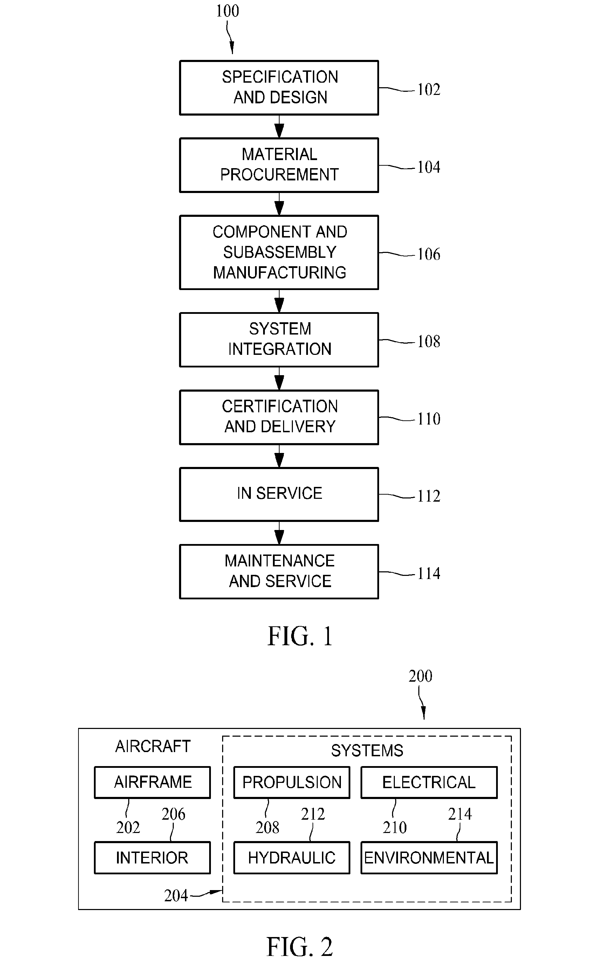

Referring more particularly to the drawings, embodiments of the disclosure may be described in the context of aircraft manufacturing and service method 100 as shown in Figure 1 and an aircraft 200 as shown in Figure 2. During pre-production, aircraft manufacturing and service method 100 may include specification and design 102 of aircraft 200 and material procurement 104.

During production, component and subassembly manufacturing 106 and system integration 108 of aircraft 200 takes place. Thereafter, aircraft 200 may go through certification and delivery 110 in order to be placed in service 112. While in service by a customer, aircraft 200 is scheduled for routine maintenance and service 114 (which may also include modification, reconfiguration, refurbishment, and so on).

Each of the processes of aircraft manufacturing and service method 100 may be performed or carried out by a system integrator, a third party, and/or an operator (e.g., a customer). For the purposes of this description, a system integrator may include, without limitation, any number of aircraft manufacturers and major-system subcontractors; a third party may include, for example, without limitation, any number of venders, subcontractors, and suppliers; and an operator may be an airline, leasing company, military entity, service organization, and so on.

As shown in Figure 2, aircraft 200 produced by aircraft manufacturing and service method 100 may include airframe 202 with a plurality of systems 204 and interior 206. Examples of systems 204 include one or more of propulsion system 208, electrical system 210, hydraulic system 212, and environmental system 214. Any number of other systems may be included in this example. Although an aerospace example is shown, the principles of the disclosure may be applied to other industries, such as the automotive industry.

Apparatus and methods embodied herein may be employed during any one or more of the stages of aircraft manufacturing and service method 100. For example, without limitation, components or subassemblies corresponding to component and subassembly manufacturing 106 may be fabricated or manufactured in a manner similar to components or subassemblies produced while aircraft 200 is in service.

Also, one or more apparatus embodiments, method embodiments, or a combination thereof may be utilized during component and subassembly manufacturing 106 and system integration 108, for example, without limitation, by substantially expediting assembly of or reducing the cost of aircraft 200. Similarly, one or more of apparatus embodiments, method embodiments, or a combination thereof may be utilized while aircraft 200 is in service, for example, without limitation, to maintenance and service 114 may be used during system integration 108 and/or maintenance and service 114 to determine whether parts may be connected and/or mated to each other.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

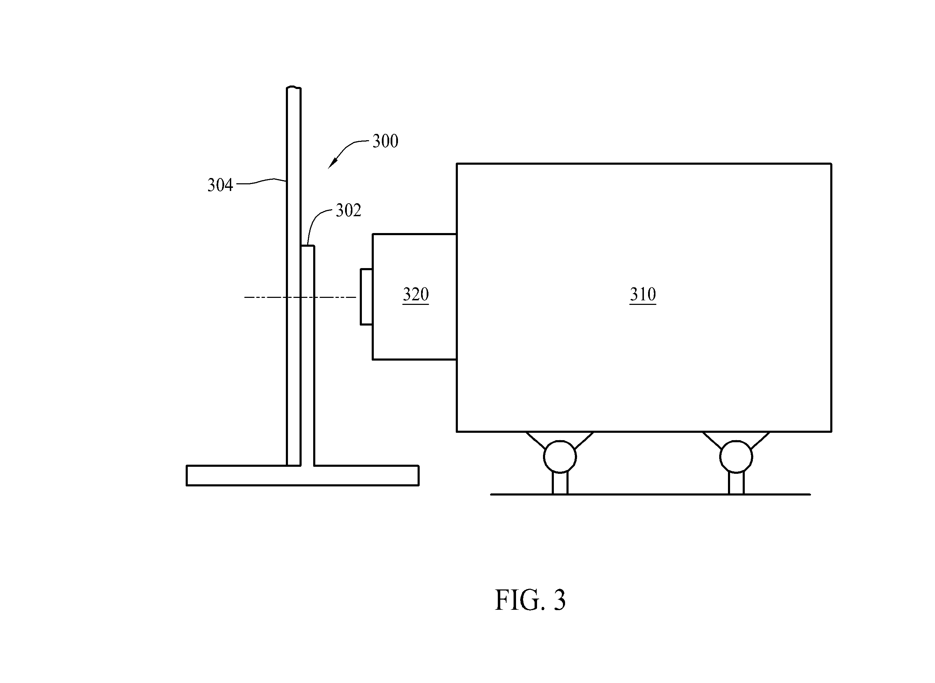

Turning now to Figures 3-9, a process for fabricating a structure 300 incorporating an interference fit fastener to provide an attachment between a metallic component 302 and a composite component 304 is illustrated. A numeric controlled drill-fill system 310 is utilized, which locates to a drilling location, and in embodiments, operates to press metallic component 302 and composite component 304 together.

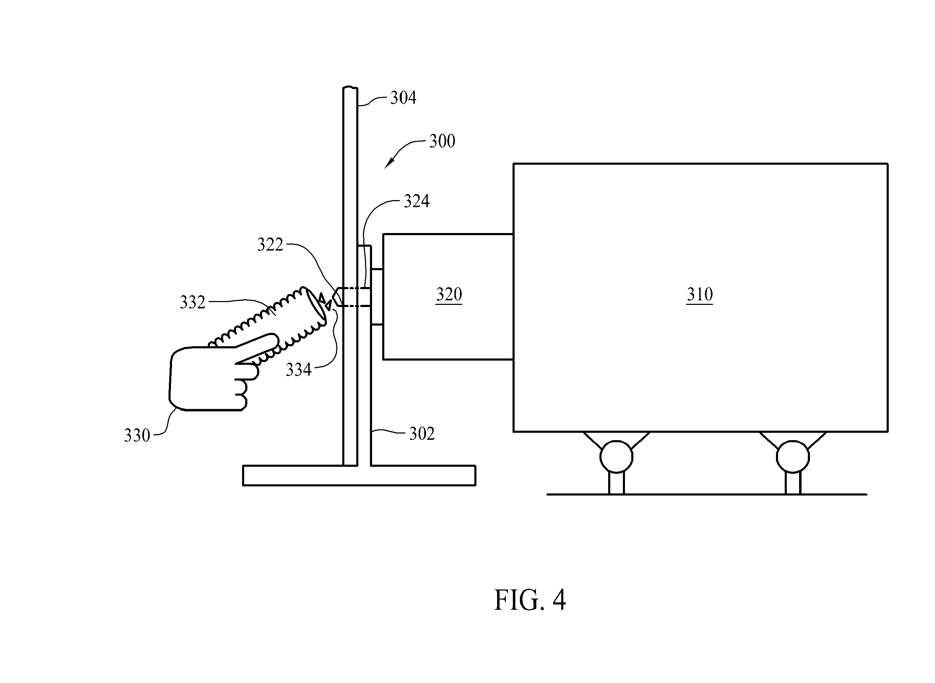

As shown in Figure 4, drill-fill system 310 extends a head 320 incorporating a drill bit 322 towards the metallic component 302 and composite component 304 and commences to drill a hole 324 therethrough. A mechanic on the opposite side of the structure 300 from drill-fill system 310 may operate a vacuum device 332 to clear away debris 334 from the drilling process. In certain industries, such as the aircraft industry, it is important to remove such debris.

Depending upon which type of fastener is to be utilized, drill-fill system 310 may be operated to provide a countersink (not shown) such that upon insertion, a fastener head and metallic component form a flush surface. It is important to note that metallic component 302 is located as being proximate to drill-fill system 310. This is simply one illustrative embodiment. In other embodiments it is composite component 304 that is proximate drill-fill system 310.

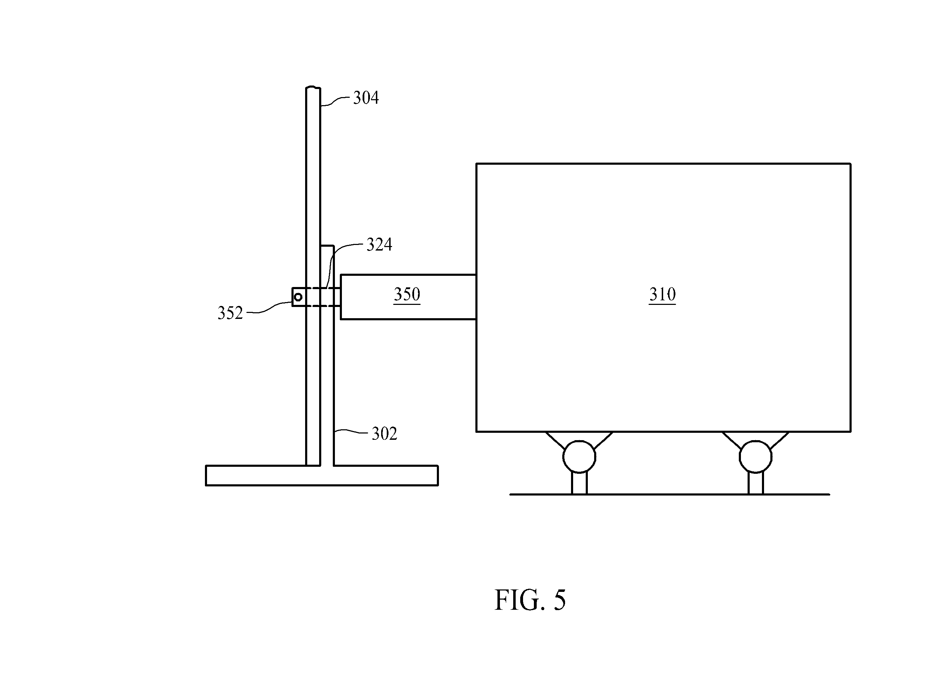

Figure 5 illustrates that the head 320 of drill-fill system 310 is replaced with a head 350 which incorporates a hole probe 352. Hole probe 352 is automated and operates to check hole diameter, stack thickness, chamfer depth, gaps and the like between metallic component 302 and composite component 304.

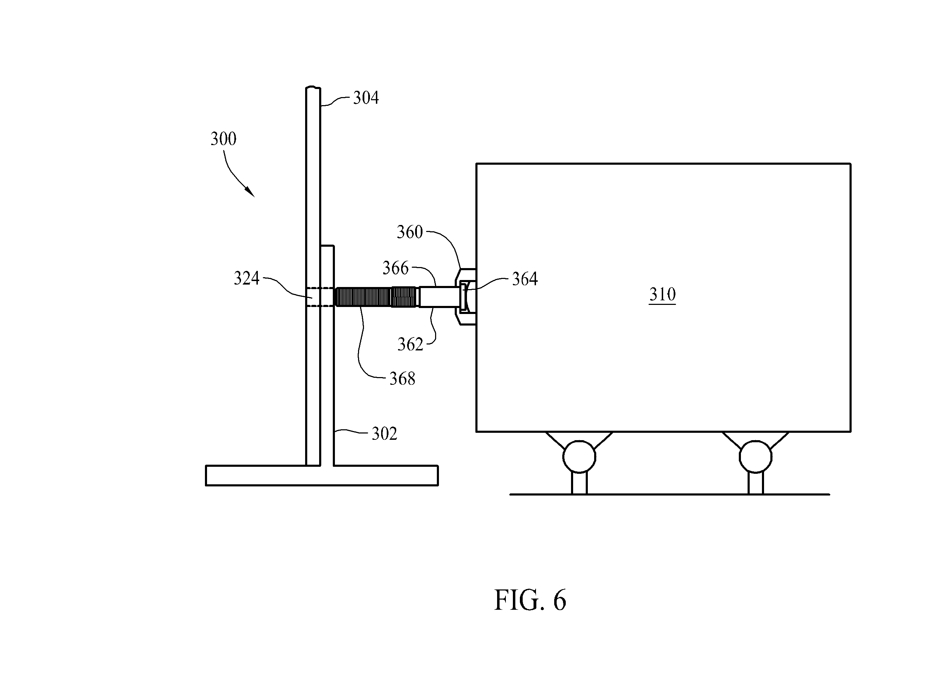

Once drill-fill system 310 has verified that the structure 300 and the hole 324 extending therethrough meet specifications, a fastener feed head 360 is utilized by drill-fill system 310 to insert an interference fit fastener 362 into the hole 324. In one embodiment, and as shown in Figure 6, drill-fill system 310 feeds the interference fit fasteners 362 into feed head 360 and verifies a diameter of the fastener 362 and that feed head 360 has a proper grip on a head 364 of the fastener 362. In certain embodiment, drill-fill system 310 verifies a length of the shank of the interference fit fasteners, and/or verifies that the fastener 362 incorporates the proper size and length of threads therein.

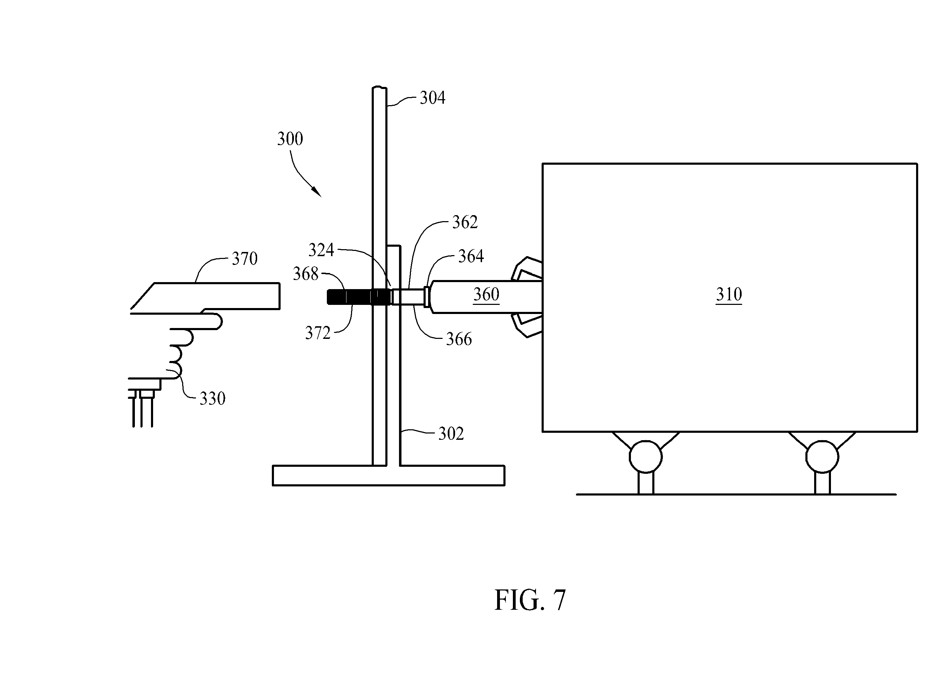

Figure 7 shows that drill-fill system 310 inserts fastener 362 into hole 324 holding pressure on fastener head 364 through feed head 360 until an enlarged shank portion 366 (the source of the interference fit) of interference fit fastener 362 touches the entrance of the hole on the proximate side 324 and the puller engaging portion 368 of the shank extends from the distal side. As known, the shank portion 366 of fastener 362 has a diameter somewhat larger that the diameter of hole 324, for example in the range of 0.001 inch to about 0.005 inch. Mechanic 330 prepares to pull fastener 362 the remaining distance from the opposite side of the assembly 300 using a hydraulic puller 370. As is known in all-metallic structures, hydraulic puller 370 operates to engage a pull stem 372 portion of the interference fit fastener 362. In embodiments, one or both of a lubricant and a lubricating coating are added to the interference fit fastener 362 which eases the pulling of the shank portion of the oversized interference fit fastener through the hole 324.

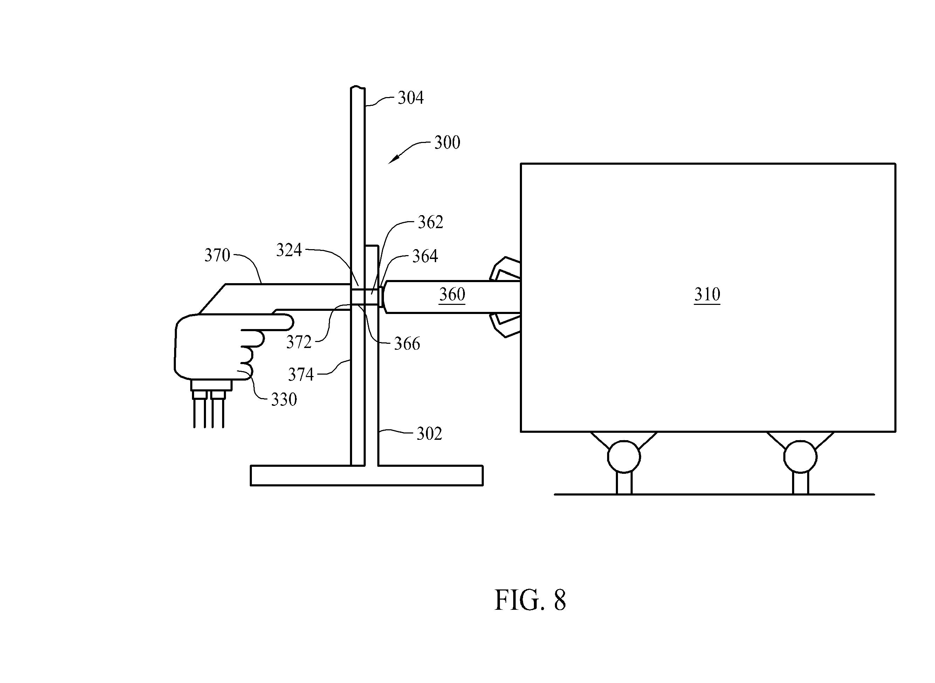

Figure 8 illustrates assembly 300 after hydraulic puller 370 has been operated to pull fastener 362 the remainder of the way into the hole 324 such that fastener head 364 is firmly seated against metallic component 302. A nose piece 372 of the hydraulic puller 370 provides a counterforce on the exit side 374 of the material 304. This counterforce operates to maintain compression between those embodiments, such as illustrated in the Figures, where the composite material is the material on the exit side 374 of the assembly, adjacent the hydraulic puller.

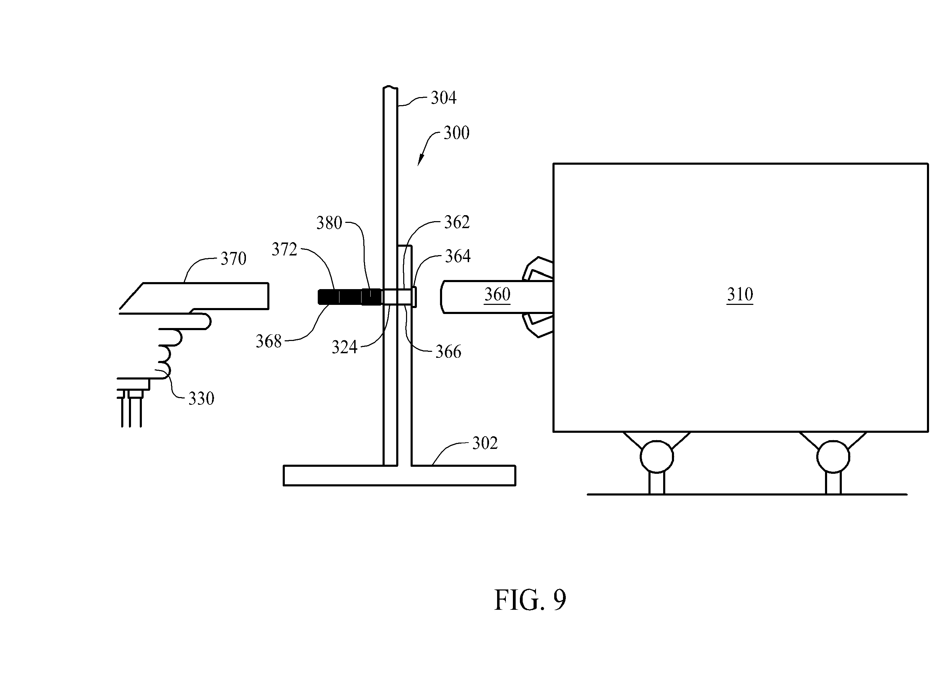

Threads 380 (shown in Figure 9) of fastener 362 are exposed having passed through composite component 304 due to operation of hydraulic puller 370. At this point a nut or swaging device can be inserted onto the threads 380 and the pull stem 372 may be removed, for example, by breaking it off fastener 362 using a lateral force. As shown in Figure 9, feed head 360 is retracted from the assembly 300.

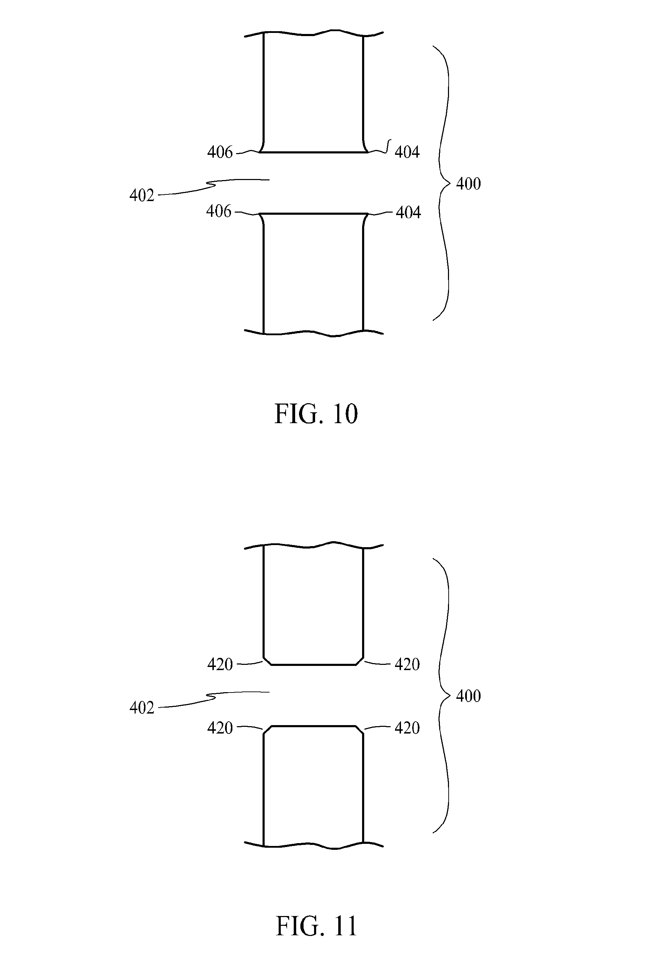

Figures 10 and 11 illustrate hole formation in metallic materials and further illustrate the improvement the described embodiments are directed towards. Specifically, Figure 10 illustrates a cross-section of a material 400, such as titanium or aluminum, having a hole 402 drilled through. Though shown somewhat in exaggerated view, the drilling operation results in entrance burrs 404 and exit burrs 406 being formed and substantially surrounding hole 402. If such burred holes 402 are utilized with a clearance fastener, there is a space between the fastener and the cylindrical wall in the material that results from the hole drilling operation. When used in a service environment, burrs 404 and 406 provide a starting point for fatigue fractures and the like due to the uneven nature of such burrs.

As illustrated in Figure 11, to reduce the occurrence of fatigue fractures, the traditional solution comprised creating chamfers 420 in both sides of material 400. The smoothness in the material surfaces due to the chamfering operation reduces the occurrences of fatigue fractures in material 400. However, to form the chamfers 420, the metallic and composite assemblies generally have to be separated from one another after the drilling operations. In the fabrication of large assemblies such as aircraft, this assembly, drilling, disassembly, chamfering, and reassembly process is performed for thousands upon thousands of such fasteners and has the associated labor costs involved therewith.

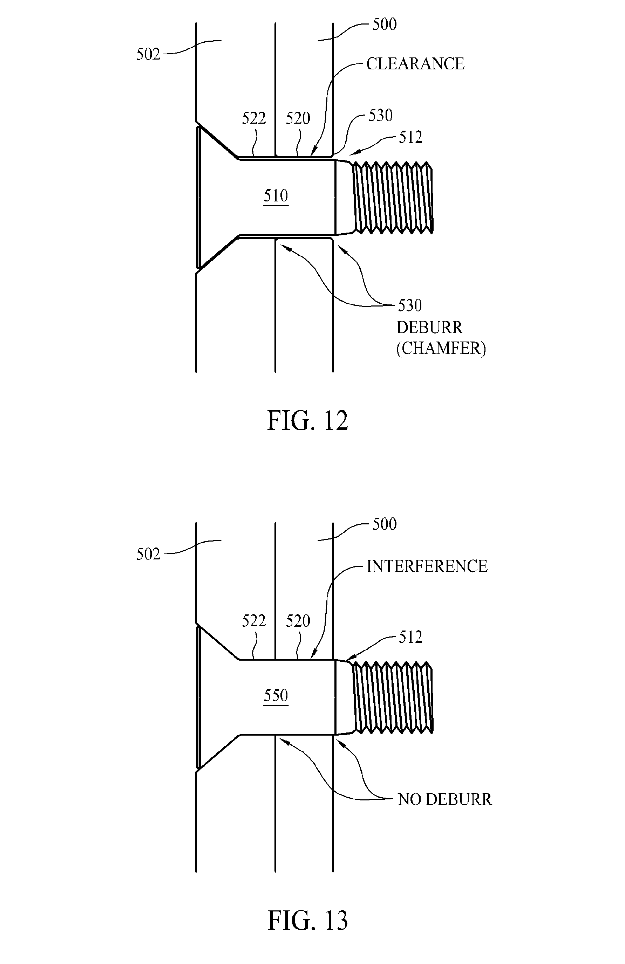

Figure 12 further illustrates the current methodology in regard to the joining of a metallic component 500 and a composite component 502. Particularly, a clearance fit fastener 510 is utilized. Since the clearance fit fastener 510 does not engage the walls 520, 522 defined by the bore 512 in the components 500 and 502 (hence the name "clearance"), no pressure is exerted along the walls 520, 522 of the bore 512 by the fastener 510. This lack of pressure allows for any burrs in the metallic component 500 to act as a starting point for fatigue fractures and cracking. As shown, after the drilling process, the assembly is disassembled so that any burrs can be removed by the addition of the chamfers 530.

In contrast, Figure 13 incorporates an interference fit fastener 550. There is no space between fastener 550 and the walls 520, 522 of the bore 512. In contrast to the diagram of Figure 12, interference fit fastener 550 exerts a pressure on the walls 520, 522 about the circumference of the bore 512 such that any burrs that remain after a drilling process are essentially counteracted by the pressure applied by the interference fit fastener 550. As such, a separate deburring/chamfering process for the metallic component 500 is not required. Incorporation of interference fit fasteners into holes that have burrs addresses the fatigue fracture issue. Simply, even with the existence of burrs, the stress created on the materials by the insertion and subsequent retention of the interference fit fastener 550 counteracts the tendency to fracture.

The conventional practice, prior to the embodiments disclosed herein, has been to not attach metal and composite structures using a sleeveless interference fit fastener. Concerns heretofore have included a concern over whether the composite material was damaged during installation and/or removal of the interference fit fastener, if installation forces needed for interference fit fasteners were feasible, and if the fatigue benefit from utilization of interference fit fasteners mitigate the existence of burrs in one or both of the metallic component and the composite component.

In testing, interference levels of 0.001 to 0.005 inch have been tested. To clarify, an interference level of 0.002 inch indicates that the diameter of the interference fit fastener is 0.002 inch larger than the diameter of the hole into which it is to be inserted. Insertion of such a fastener necessarily causes certain stresses to be applied about the circumference of the hole and may enlarge the hole to some extent. These stresses and/or hole enlargement is what provides the counteraction, at least in part, to the generation of fatigue fractures and cracking and allows fabricators to not take apart drilled assemblies to chamfer burrs from metallic components. Additionally, installation and removal of interference fit fasteners has not significantly damaged composite components.

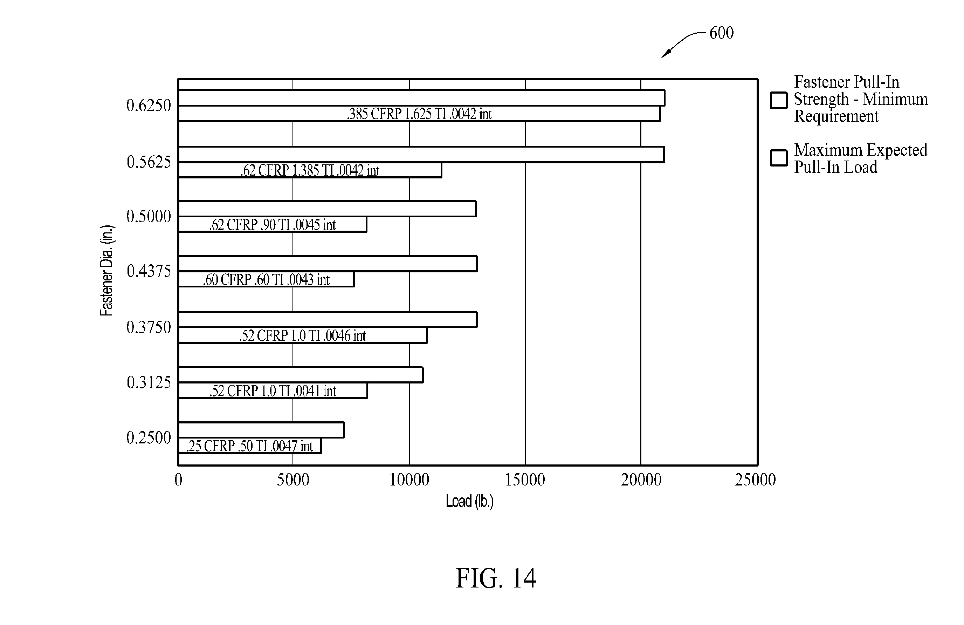

Figure 14 is a graph 600 illustrating pulling load requirements and capabilities for various fastener diameters. The minimum fastener pull-in strength is shown for fastener diameters ranging from 0.25 inch to 0.625 inch. Shown against these minimum requirements are test data for each fastener diameter, when pulled through adjacent carbon fiber and titanium parts. The test data includes a width of the carbon fiber part, a width of the titanium part, and the amount of interference in inches and represents the most extreme case for typical airplane structure. As shown, this maximum expected pulling load needed for insertion of such interference fit fasteners does not exceed the minimum fastener strength requirement.

It is important to note that the described embodiments are not directed fits that incorporate a minimal interference. Rather, the described embodiments are directed to joints where a substantial amount of interference is utilized such that the interference counteracts the fatigue fracturing tendencies induced by burrs left over from drilling. As such, the amount of pull force needed to seat such fasteners is relevant.

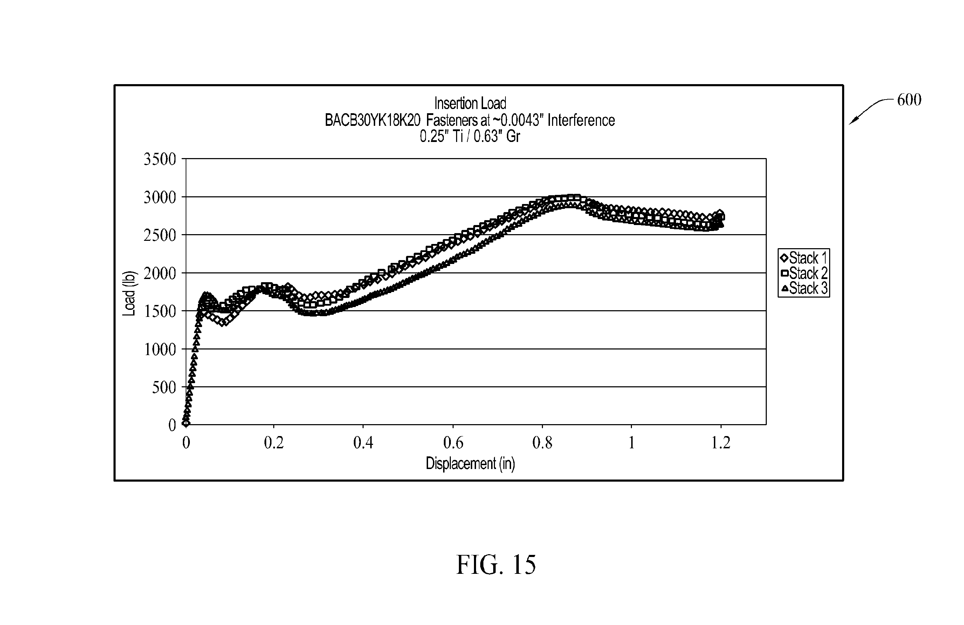

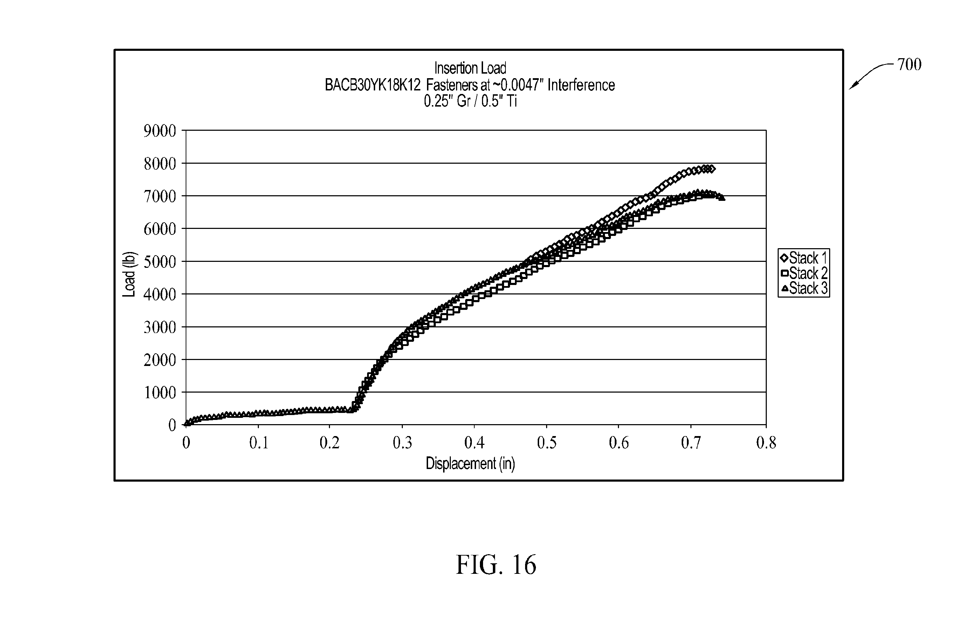

Figure 15 is a graph 650 that illustrates three insertion load graphs for an interference fit fastener of 0.0043 inch interference being pulled through an assembly of 0.25 inch thick titanium and 0.63 inch of graphite composite. Figure 16 is a graph 700 that illustrates three insertion load graphs for an interference fit fastener of 0.0047 inch interference being pulled through an assembly of 0.25 inch thick graphite composite and 0.5 inch of titanium. In other testing, a fastener with a 0.006 inch interference has been applied to a hole through a 1.25 inch thick graphite stack with negligible effect.

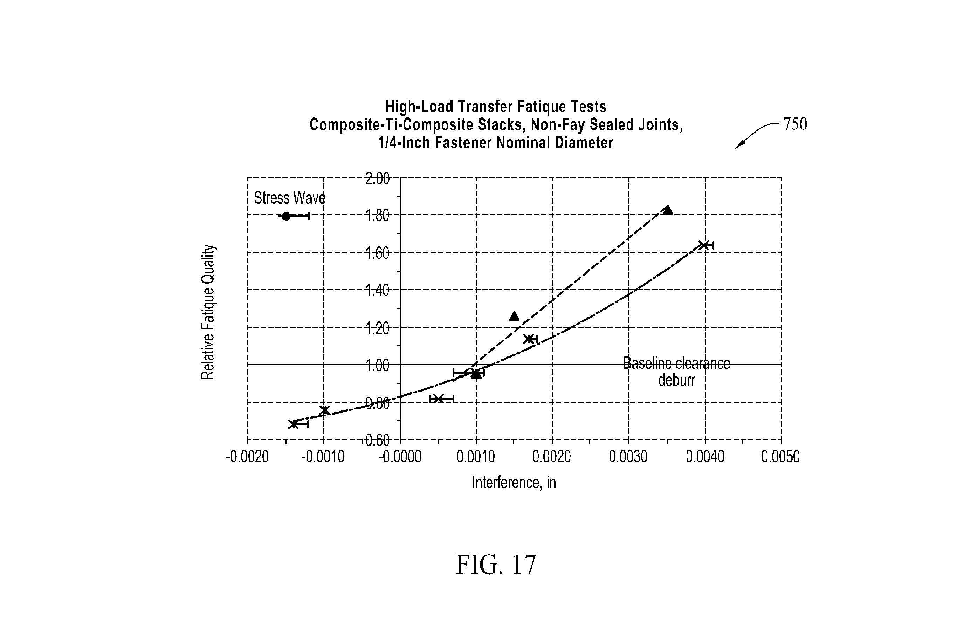

Figure 17 is a graph 750 illustrating that for two different fasteners, the relative fatigue quality increases as the amount of interference increases as compared to a baseline.
In particular, graph 750 is directed to composite titanium composite stacks using a 0.25 inch nominal interference fit fastener.

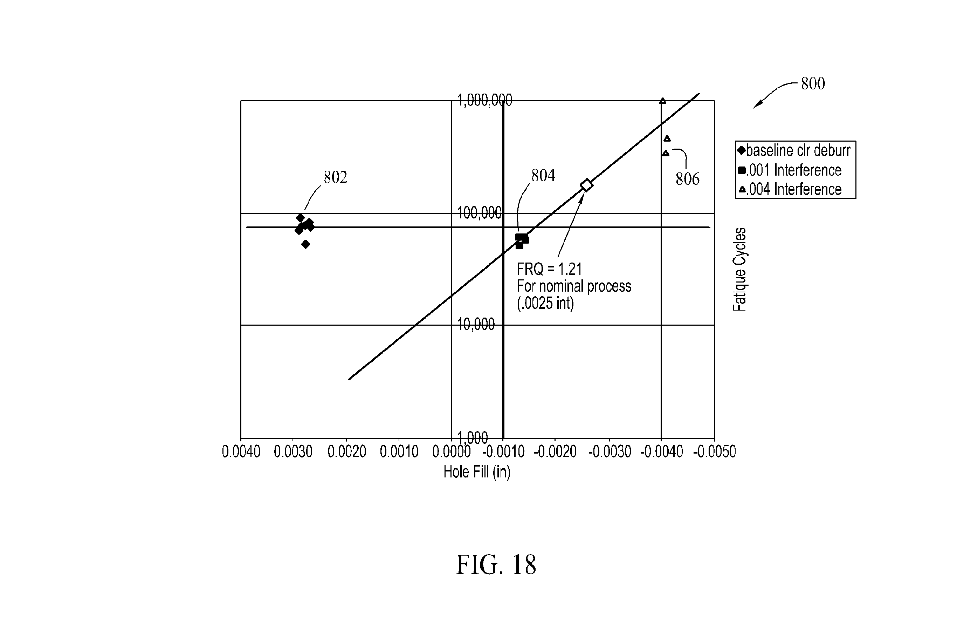

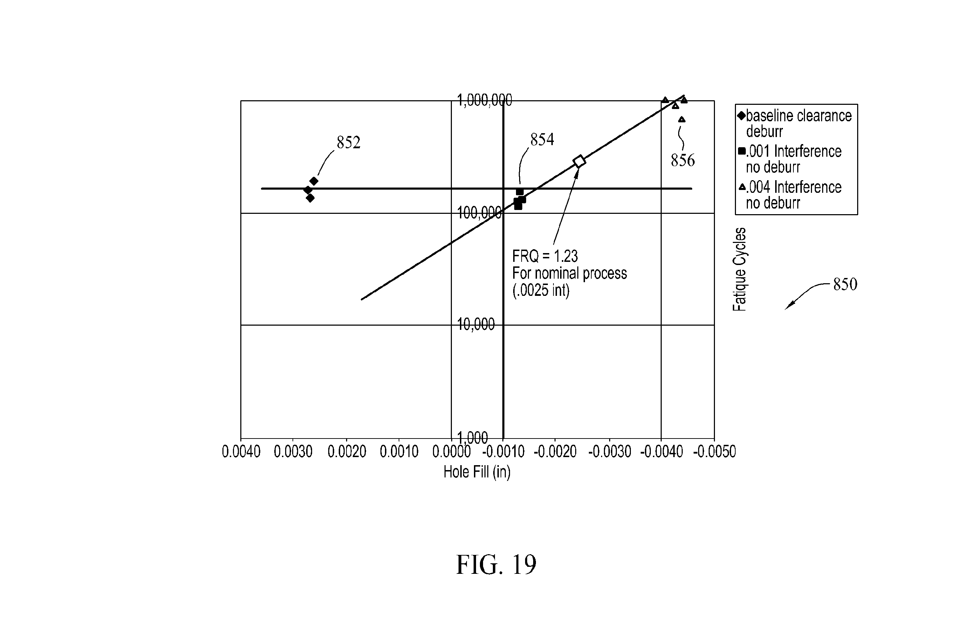

Figures 18 and 19 are graphs 800 and 850 that illustrate the effect of interference on fatigue life. In graph 800, data 802 indicate the fatigue life when a deburred hole, clearance fit fastener is utilized. Data 804 indicate the fatigue life when an interference fit fastener having approximately 0.001 inch of inference is utilized with no deburring operation. Data 806 indicate the fatigue life when an interference fit fastener having approximately 0.004 inch of inference is utilized with no deburring operation. Graph 800 is directed to a 5/16 inch (nominal) fastener while graph 850 is directed to a 7/16 inch (nominal) fastener. In graph 850, data 852 indicate the fatigue life when a deburred hole, clearance fit fastener is utilized. Data 854 indicate the fatigue life when an interference fit fastener having approximately 0.001 inch of inference is utilized with no deburring operation. Data 856 indicate the fatigue life when an interference fit fastener having approximately 0.004 inch of inference is utilized with no deburring operation.

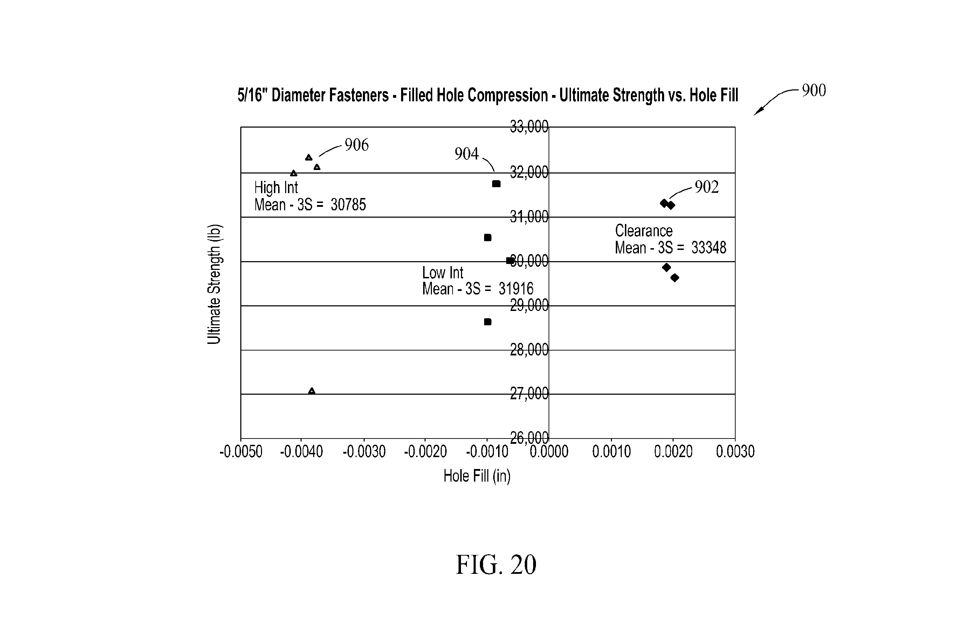

Figure 20 is a graph 900 that illustrates filled hole compression for a 5/16 inch (nominal) fastener. In graph 900, data 902 indicate the strength of the compression when a deburred hole, clearance fit fastener is utilized. Data 904 indicate the compression strength when an interference fit fastener having approximately 0.001 inch of inference is utilized with no deburring operation. Data 906 indicate the compression strength when an interference fit fastener having approximately 0.004 inch of inference is utilized with no deburring operation.

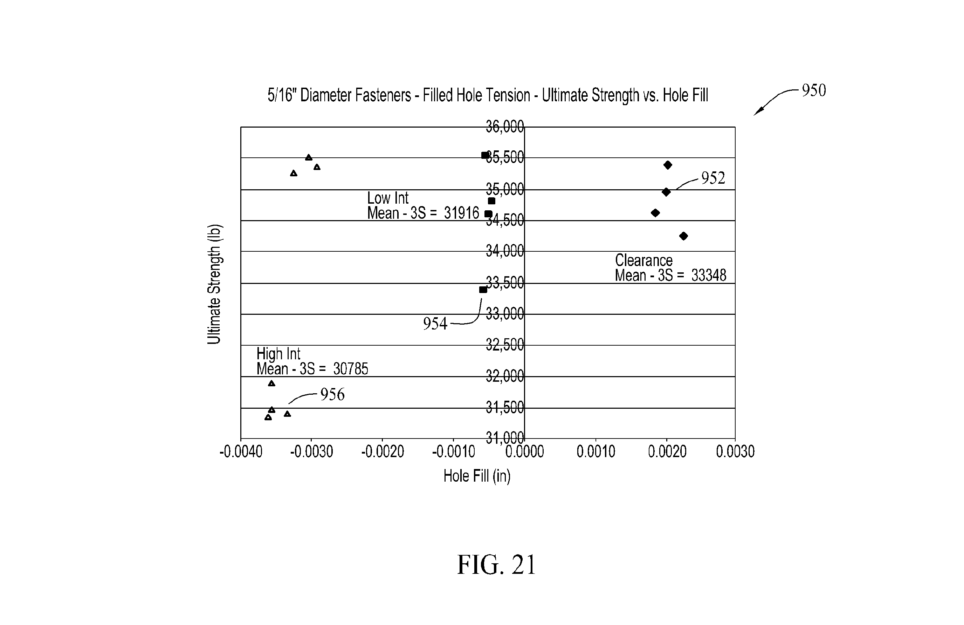

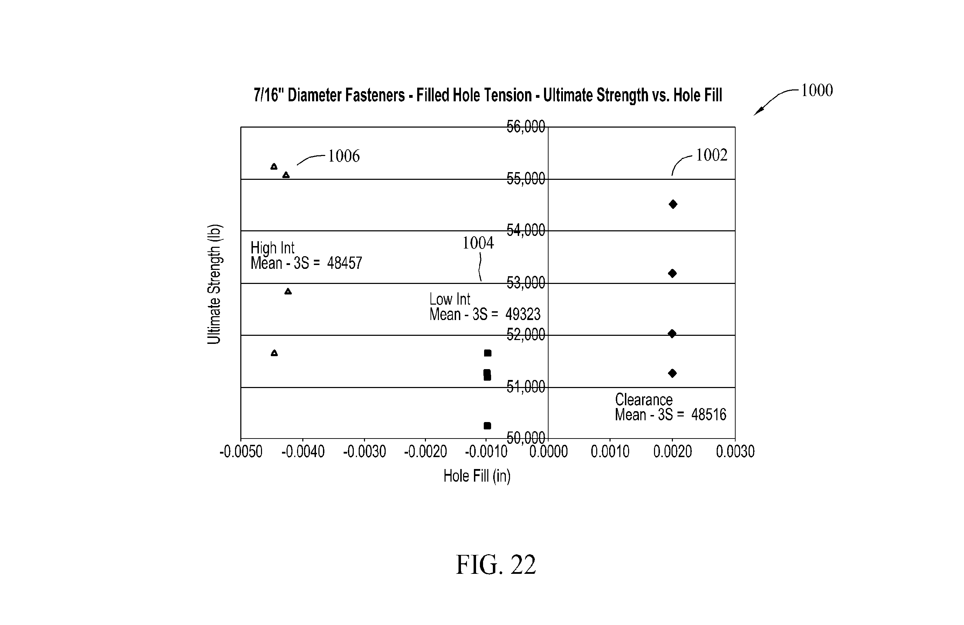

Figures 21 and 22 are graphs 950 and 1000 that illustrate filled hole tension based on interference. In graph 950, data 952 indicate the filled hole tension when a deburred hole, clearance fit fastener is utilized. Data 954 indicate the filled hole tension when an interference fit fastener having approximately 0.001 inch of inference is utilized with no deburring operation. Data 956 indicate the filled hole tension when an interference fit fastener having approximately 0.004 inch of inference is utilized with no deburring operation. Graph 950 is directed to a 5/16 inch (nominal) fastener while graph 1000 is directed to a 7/16 inch (nominal) fastener. In graph 1000, data 1002 indicate the filled hole tension when a deburred hole, clearance fit fastener is utilized. Data 1004 indicate the filled hole tension when an interference fit fastener having approximately 0.001 inch of inference is utilized with no deburring operation. Data 1006 indicate the filled hole tension when an interference fit fastener having approximately 0.004 inch of inference is utilized with no deburring operation.

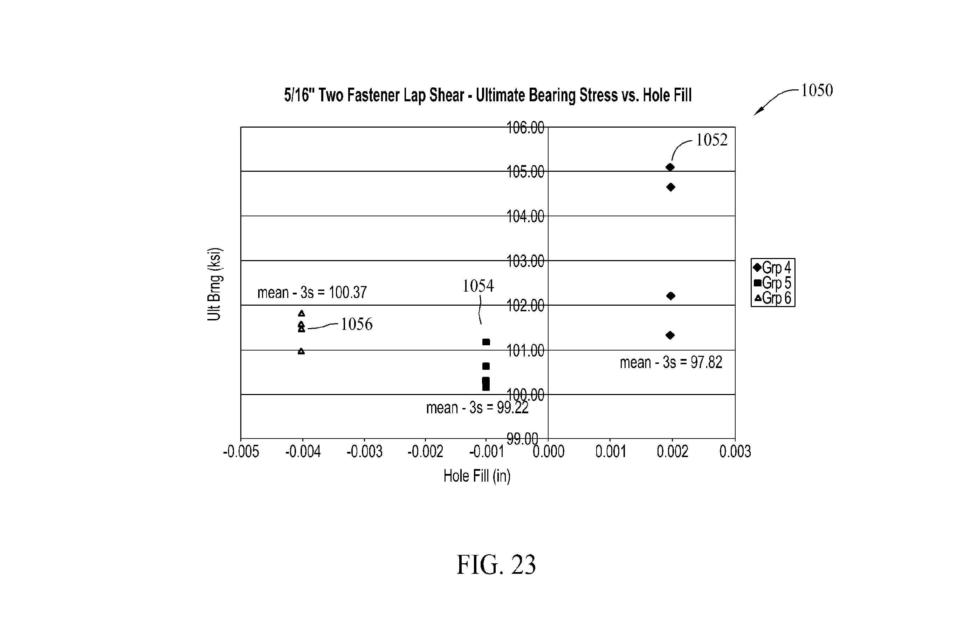

Figure 23 is a graph 1050 that illustrates ultimate bearing stress for a 5/16 inch (nominal) fastener. In graph 1050, data 1052 indicate the ultimate bearing stress when a deburred hole, clearance fit fastener is utilized. Data 1054 indicate the ultimate bearing stress when an interference fit fastener having approximately 0.001 inch of inference is utilized with no deburring operation. Data 1056 indicate the ultimate bearing stress when an interference fit fastener having approximately 0.004 inch of inference is utilized with no deburring operation.

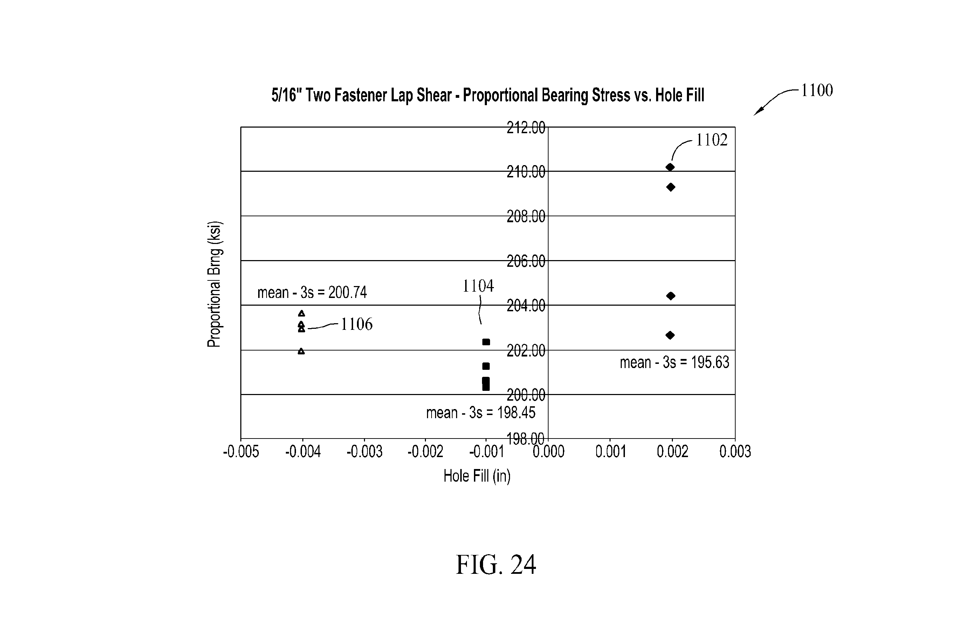

Figure 24 is a graph 1100 that illustrates proportional bearing stress for a 5/16 inch (nominal) fastener. In graph 1100, data 1102 indicate the proportional bearing stress when a deburred hole, clearance fit fastener is utilized. Data 1104 indicate the proportional bearing stress when an interference fit fastener having approximately 0.001 inch of inference is utilized with no deburring operation. Data 1106 indicate the proportional bearing stress when an interference fit fastener having approximately 0.004 inch of inference is utilized with no deburring operation.

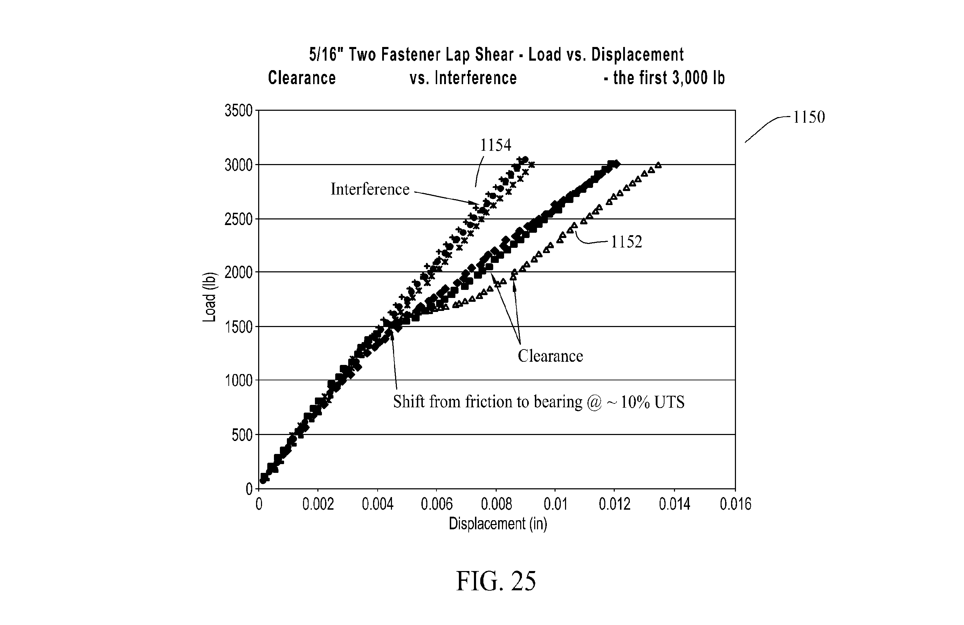

Figure 25 is a graph 1150 that illustrates lap shear (load vs. displacement) for the first 3000 pounds of load for a 5/16 inch (nominal) fastener. In graph 1150, data 1152 indicate the lap shear load when a deburred hole, clearance fit fastener is utilized. Data 1154 indicate the lap shear load when an interference fit fastener is utilized with no deburring operation.

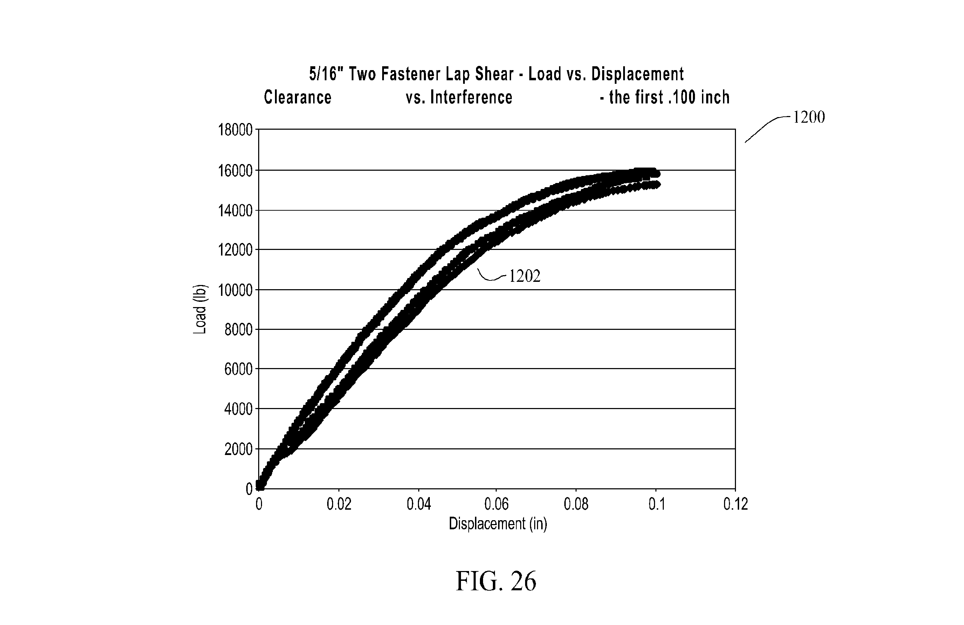

Figure 26 is a graph 1200 that illustrates lap shear (load vs. displacement) for the first 0.1 inch of displacement for a 5/16 inch (nominal) fastener. In graph 1200, data 1202 indicate the lap shear load when a deburred hole, clearance fit fastener is utilized generally tracks the lap shear load when an interference fit fastener is utilized with no deburring operation.

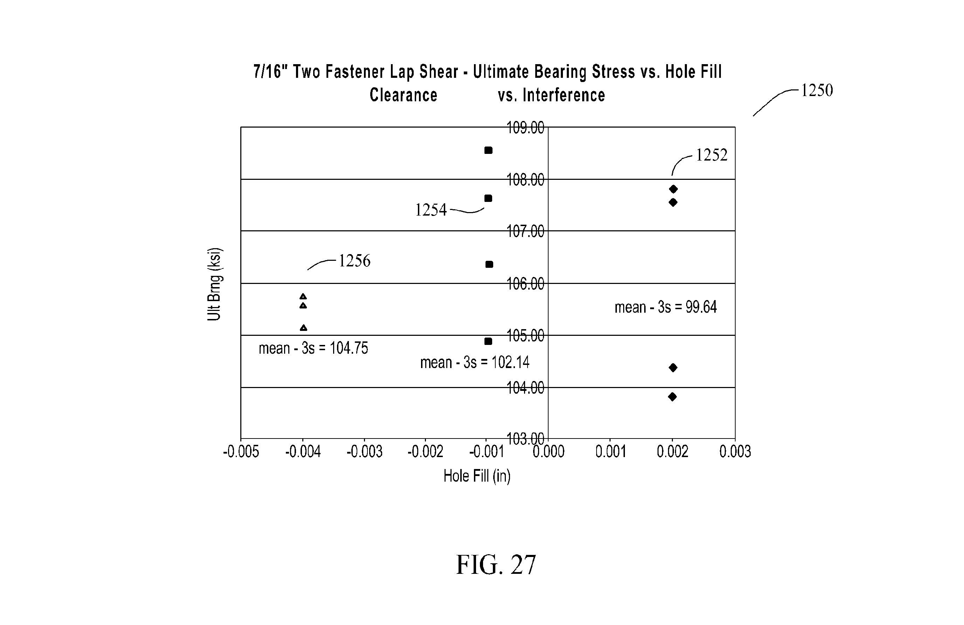

Figure 27 is a graph 1250 that illustrates ultimate bearing stress for a 7/16 inch (nominal) fastener. In graph 1250, data 1252 indicate the ultimate bearing stress when a deburred hole, clearance fit fastener is utilized. Data 1254 indicate the ultimate bearing stress when an interference fit fastener having approximately 0.001 inch of inference is utilized with no deburring operation. Data 1256 indicate the ultimate bearing stress when an interference fit fastener having approximately 0.004 inch of inference is utilized with no deburring operation.

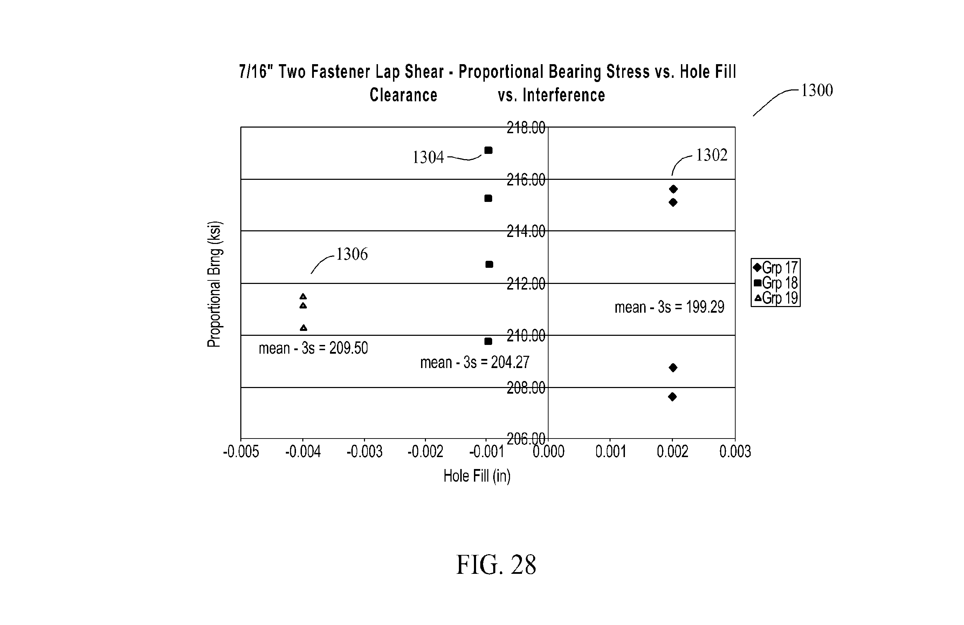

Figure 28 is a graph 1300 that illustrates proportional bearing stress for a 7/16 inch (nominal) fastener. In graph 1300, data 1302 indicate the proportional bearing stress when a deburred hole, clearance fit fastener is utilized. Data 1304 indicate the proportional bearing stress when an interference fit fastener having approximately 0.001 inch of inference is utilized with no deburring operation. Data 1306 indicate the proportional bearing stress when an interference fit fastener having approximately 0.004 inch of inference is utilized with no deburring operation.

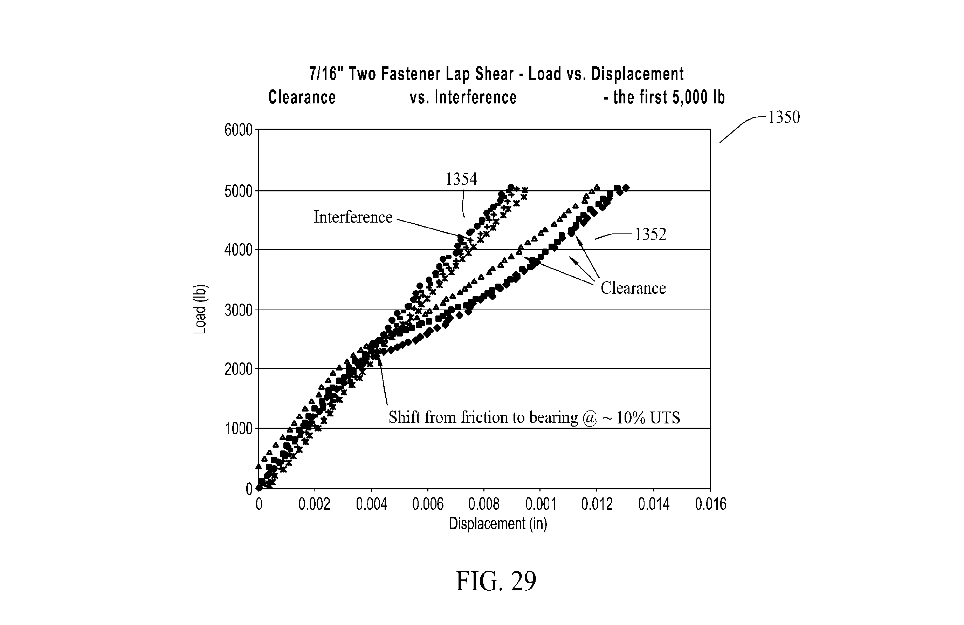

Figure 29 is a graph 1350 that illustrates lap shear (load vs. displacement) for the first 5000 pounds of load for a 7/16 inch (nominal) fastener. In graph 1350, data 1352 indicate the lap shear load when a deburred hole, clearance fit fastener is utilized. Data 1354 indicate the lap shear load when an interference fit fastener is utilized with no deburring operation.

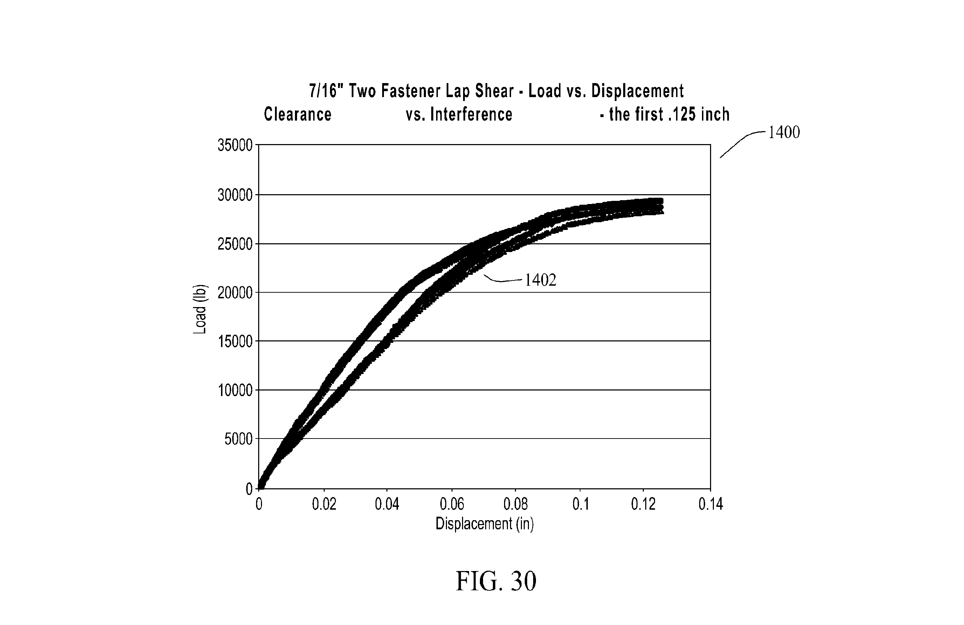

Figure 30 is a graph 1400 that illustrates lap shear (load vs. displacement) for the first 0.125 inch of displacement for a 7/16 inch (nominal) fastener. In graph 1400, data 1402 indicate the lap shear load when a deburred hole, clearance fit fastener is utilized generally tracks the lap shear load when an interference fit fastener is utilized with no deburring operation.

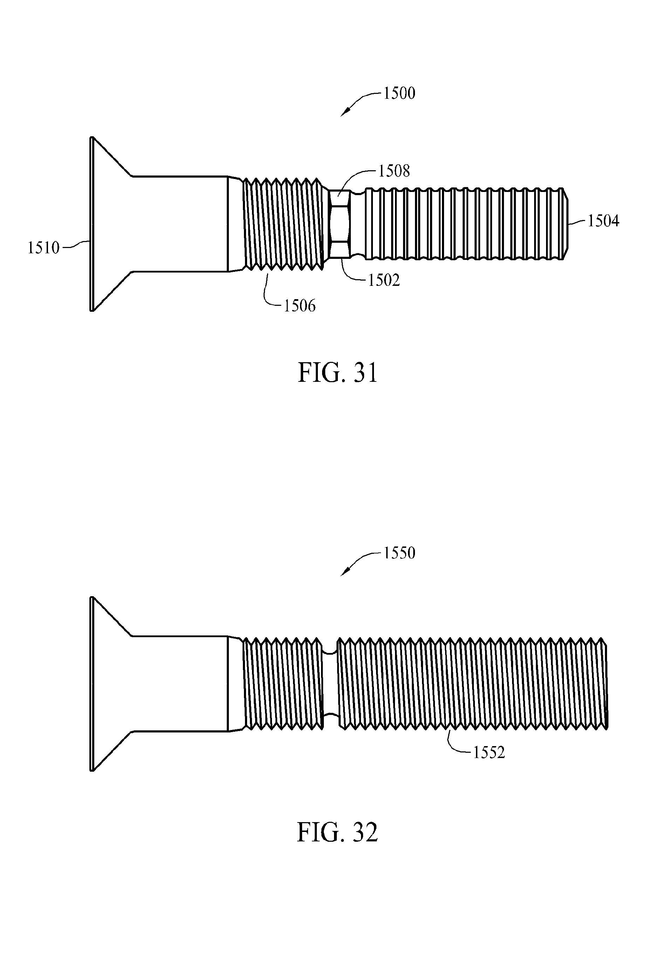

Figure 31 is a side view of an interference fit fastener 1500 that incorporates an anti-rotation feature 1502, so that a mechanic proximate the distal end 1504 is able to keep fastener 1500 from rotating while installing a nut onto the thread 1506. With such an arrangement, installation can be performed from one side. In the illustrated embodiment, the anti-rotation feature 1502 is a hexagonal structure 1508 which can be accessed while the nut is being tightened. No mechanic is required to engage the head 1510 of the fastener 1500. Since the anti-rotation feature 1502 will not break off in certain embodiments, some weight is added.

Figure 32 is a side view of an interference fit fastener 1550 embodiment that incorporates a threaded pull stem 1552. The threaded pull stem provides for low profile, torque drive installation tools to replace fastener pull in tools.

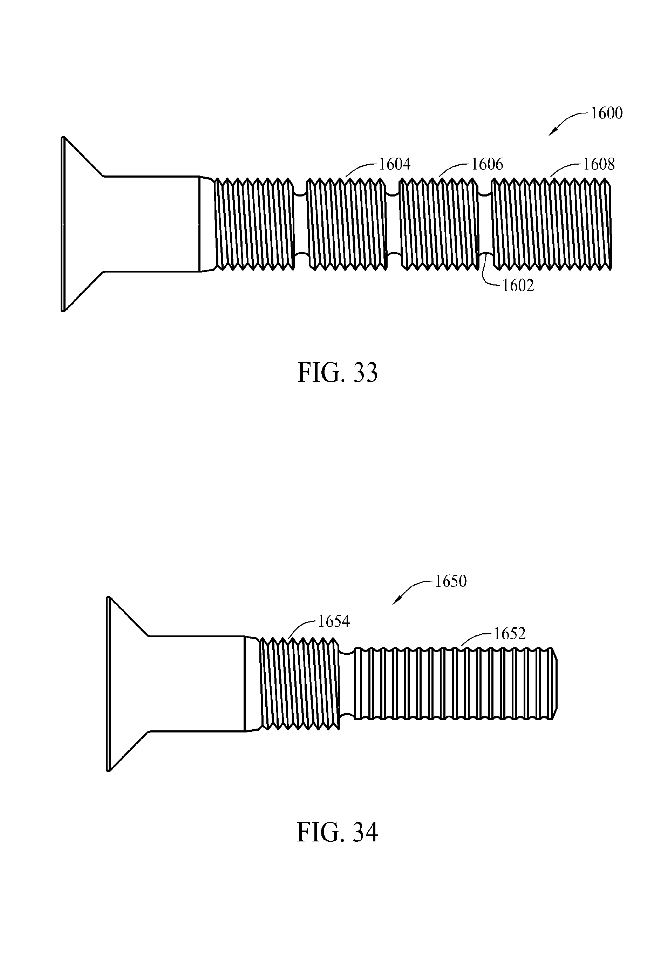

Figure 33 is a side view of an interference fit fastener 1600 embodiment that incorporates a segmented pull stem 1602 including pull stem components 1604, 1606, and 1608. The segmented and threaded pull stem 1602 provides for low profile, torque drive installation tools to replace fastener pull in tools. The segmentation allows for stepped pull in installation in low clearance areas as each segment, starting with pull stem component 1608 can be broken off as soon as the adjacent segment (pull stem component 1608) can be accessed with a pull in tool.

Figure 34 is a side view of an interference fit fastener 1650 embodiment that incorporates an undersized pull stem 1652. The undersized pull stem 1652 allows a nut (not shown) to be slid over the stem 1652 for eventual engagement with threads 1654. Such embodiments may require a torque tool to grip the stem 1652 for a counter torque when the nut is applied. Fastener 1650 enables a pull in interference fit without utilization of a spinner.

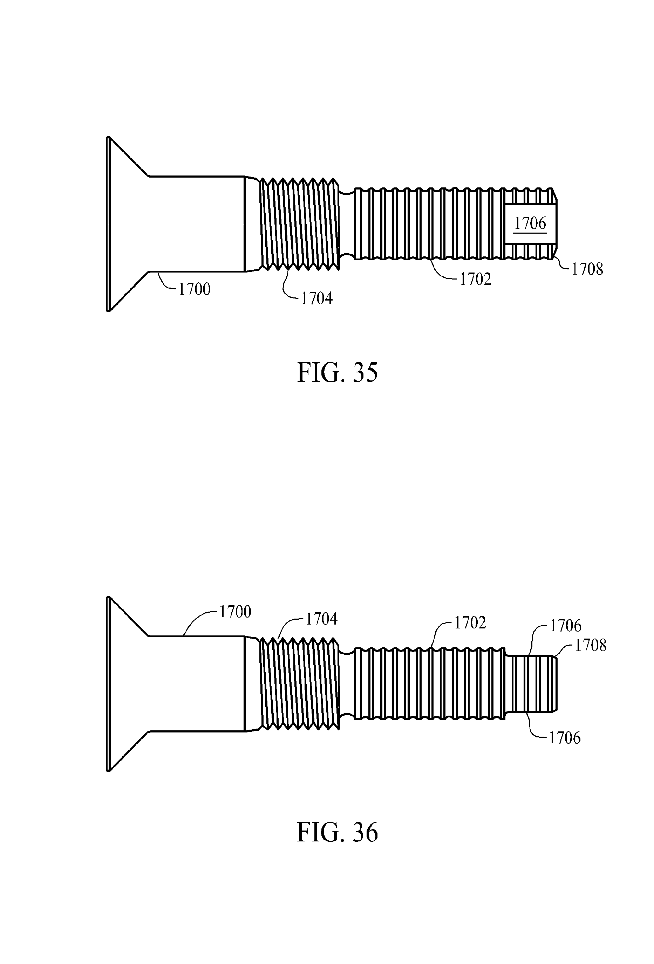

Figures 35 and 36 are side views of an interference fit fastener 1700 embodiment that also incorporates an undersized pull stem 1702. The undersized pull stem 1702 allows a nut (not shown) to be slid over the stem 1702 for eventual engagement with threads 1704. Fastener 1700 incorporates a wrenching flats 1706 proximate an end 1708 thereof. In an embodiment, wrenching flats 1706 may be utilized, for example, to engage an open end wrench which is thus utilized as an anti-rotation tool for a counter torque when the nut is applied.

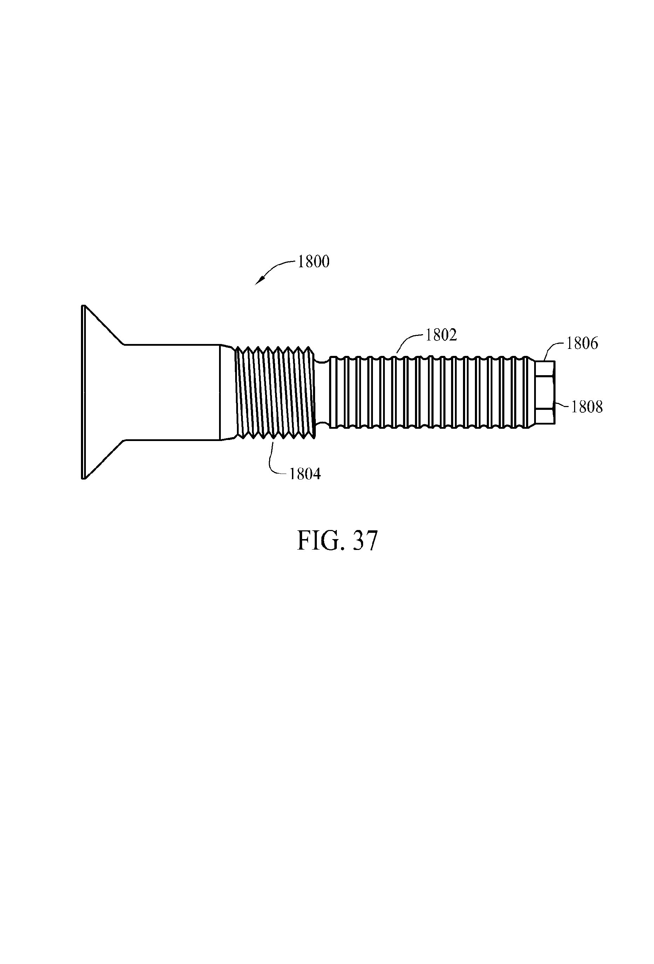

Figure 37 is a side view of an interference fit fastener embodiment 1800 that also incorporates an undersized pull stem 1802. The undersized pull stem 1802 allows a nut (not shown) to be slid over the stem 1802 for eventual engagement with threads 1804. Fastener 1800 incorporates a hexagonal end 1806 at an end 1808 thereof. In an embodiment, hexagonal end 1806 is shaped for utilization of an anti-rotation tool, such as a box end wrench or socket (neither shown) a counter torque when the nut is applied.

In summary, improvements in the formulations and materials that are utilized in the fabrication of composite materials allow for the use of interference fit fasteners to form an attachment between metallic structures and composite structures, the interference fit fasteners directly engaging the composite structure. The formulations and material improvements reduce the cracking and separation of plies that previously prevented the utilization of an interference fit. As an added benefit, the use of an interference fit directly with a composite material allows for fewer manufacturing steps associated with the metallic structure. As described herein, previously, when attaching a metallic structure and a composite structure, a hole was drilled through both, the metallic structure was then separated from the composite structure so that a deburring operation could take place prior to the attachment of the composite structure and the metallic structure using a clearance fit fastener. Since an interference fit fastener produces stresses on the metallic structure, deburring is not necessary to counteract fatigue fracturing, as described herein. The described embodiments are in contrast to the teaching of the prior art which states that an interference fit between a composite structure and a metallic structure cannot be made absent a sleeve being inserted into the composite structure.

Additional subject matter in this application that might be claimed includes:
A1. An aircraft comprising: a first component fabricated from a metallic material; a second component fabricated from a graphite epoxy material; and a sleeveless interference fit fastener providing an attachment between said first component and said second component.
A2. The aircraft according to A1 wherein said interference fit fastener comprises a shank portion and said second component comprises a hole bored therethrough defining a cylindrical wall, said shank engaging the cylindrical wall.
A3. The aircraft according to A1 wherein said first component and said second component each comprises a hole bored therethrough for insertion of said interference fit fastener, neither of said first component and said second component subject to a deburring process prior to insertion of said interference fit fastener.
A4. The aircraft according to A1 wherein said first component and said second component each comprises a hole bored therethrough for insertion of said interference fit fastener, said interference fit fastener comprising a diameter larger than a diameter of said hole.
A5. The aircraft according to A1 wherein said first component and said second component each comprises a hole bored therethrough for insertion of said interference fit fastener, said interference fit fastener comprising a diameter larger than a diameter of said hole, said interference fit fastener comprising a shank having a lubricant applied thereto.
A6. An assembly method comprising: drilling at least one hole through a composite structure and a metallic structure, the composite structure and metallic structure aligned with respect to one another, the drilling resulting in at least one burr in the metallic structure; and inserting an interference fit fastener through each of the at least one holes such that a shank associated with the fastener exerts a stress on the metallic component that counteracts a propensity for fatigue fracture introduced by the burr and such that the shank of the fastener directly engages a cylindrical wall in the composite structure formed by the drilling of the at least one hole.
A7. The method according to A6 wherein inserting an interference fit fastener comprises inserting an interference fit fastener having a diameter that is between about 0.001 inch and about 0.005 inch through the at least one hole.
A8. The method according to A6 further comprising applying a lubricant to the interference fit fastener prior to insertion into the at least one hole.
A9. The method according to A6 wherein inserting an interference fit fastener comprises: inserting a pull stem of the interference fit fastener, the pull stem having a diameter smaller than the at least one hole through the at least one hole from a first side of the aligned composite structure and metallic structure; engaging the pull stem from a second side of the aligned composite structure and metallic structure; and operating the engagement to pull the interference fit fastener such that a head of the interference fit fastener engages the first side of the aligned composite structure and metallic structure.
A10. A method for improving fatigue life of a joint between a composite material component and a metallic material component, said method comprising: drilling a hole through the composite material component and the metallic material component; aligning the drilled holes; selecting an interference fit fastener, the interference fit fastener having pull stem having a diameter smaller than the aligned holes and a shank portion having a diameter larger than the diameter of the aligned holes, the shank diameter selected to provide a specific interference between the shank and the cylinder defined by the hole in at least one of the composite material component and the metallic material component to counteract against potential fatigue fracturing as a result of the drilling of the hole; inserting the pull stem of the interference fit fastener into the aligned hole; and pulling the interference fit fastener, via the pull stem, into a final position with respect to the composite material component and the metallic material component to provide the specific interference.

This written description uses examples to disclose various embodiments, which include the best mode, to enable any person skilled in the art to practice those embodiments, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for joining a composite structure and a metallic structure, said method comprising:
aligning the composite structure and the metallic structure;
drilling a hole through the aligned structures creating an aligned hole; and
inserting an interference fit fastener through the aligned hole such that the interference fit fastener engages a cylindrical wall in the composite structure formed by the drilling of the hole.

2. The method according to Claim 1 wherein inserting an interference fit fastener comprises inserting the interference fit fastener without deburring the hole drilled through the metallic structure.

3. The method according to Claim 1 further comprising applying at least one of a lubricant and a lubricating coating to the interference fit fastener prior to insertion.

4. The method according to Claim 1 wherein inserting an interference fit fastener through the aligned hole comprises:
inserting a pull stem of the interference fit fastener through the aligned hole from a first side of the composite structure and metallic structure assembly;
engaging a pull stem portion of the interference fit fastener from a second side of the composite structure and metallic structure assembly with a puller; and
operating the puller to pull the interference fit fastener such that a head of the interference fit fastener engages the first side of the composite structure and metallic structure assembly.

5. The method according to Claim 1 further comprising applying a swaging device or a nut to threads of the interference fit fastener after insertion of the fastener through the aligned hole.

6. The method according to Claim 1 wherein inserting an interference fit fastener through the aligned hole comprises inserting an interference fit fastener having a diameter from about 0.001 inch to about 0.005 inch larger than the hole drilled through the composite material.

7. The method according to Claim 1 wherein inserting an interference fit fastener through the aligned hole comprises inserting an interference fit fastener having a diameter from about 0.25 inch to about 0.625 inch through the drilled hole in the composite material.

8. The method according to Claim 1 wherein:
the composite structure comprises a graphite-epoxy composite; and
the metallic structure comprises at least one of aluminum and titanium.

9. The method according to Claim 1 further comprising forming a countersink in one of the composite structure and the metallic structure to accommodate a head of the interference fit fastener.

10. A structure comprising:
a first component fabricated utilizing a composite material and comprising at least one hole formed therein, each said hole defining a composite cylindrical wall;
a second component fabricated utilizing a metallic material and comprising at least one hole formed therein, each said hole defining a metallic cylindrical wall; and
at least one interference fit fastener inserted through aligned holes in said first component and said second component, said at least one interference fit fastener in direct contact with the composite cylindrical wall.

11. The structure according to Claim 10 wherein said at least one interference fit fastener comprises a diameter from about 0.001 inch to about 0.005 inch larger than the hole drilled through said first component.

12. The structure according to Claim 10 wherein said at least one interference fit fastener comprises a diameter from about 0.25 inch to about 0.625 inch.

13. The structure according to Claim 10 wherein:
said first component comprises a graphite-epoxy composite; and
said second component comprises at least one of aluminum and titanium.

14. The structure according to Claim 10 wherein neither of said first component and said second component are subject to a deburring process after forming said at least one hole and prior to insertion of said interference fit fastener.
